# EUROPEAN PATENT APPLICATION

(11) **EP 4 296 880 A1**
(43) Date of publication of application: **27.12.2023**
(21) Application number: 22181103.7
(22) Date of filing: 24.06.2022
(51) Int. Cl.: G06F 30/23, G06F 30/15, G06F 30/10, B60C 11/24, B60C 99/00, G06F 119/04

(54) **EVALUATING WEAR OF A TIRE WITH A NON-AXISYMMETRIC TREAD PATTERN**

(71) Applicant: BRIDGESTONE CORPORATION, Chuo-ku Tokyo 104-8340 (JP)
(72) Inventor: Agoretti, Pasquale, 00128 Roma (IT); Maggi, Marco Andrea, 00128 Rome (IT); Ruggiero, Davy, 00128 Rome (IT); Kaliske, Michael, 01062 Dresden (DE); Garcia Tzintzun, Mario Alejandro, 01062 Dresden (DE); Hartung, Felix, 01062 Dresden (DE)
(74) Representative: Marchetti, Alessio

(57) **Abstract**

A computer-implemented method for evaluating wear of a tire with a non-axisymmetric tread pattern, the method comprising: providing a wear model of the tire configured to convert a frictional energy rate into a wear energy rate; providing a first three-dimensional, 3D, model of the tire with the non-axisymmetric tread pattern; generating a plurality of simplified 3D models based at least in part on the first 3D model of the tire with the non-axisymmetric tread pattern; performing a plurality of steady-state transport analyses based at least in part on each one of the plurality of simplified 3D models; post-processing the results of each of the plurality of performed steady-state transport analyses; and evaluating the wear of the tire with the non-axisymmetric tread pattern based on the post-processed results of the plurality of performed steady-state transport analyses and the wear model.

## Description

### TECHNICAL FIELD

### FIELD OF INVENTION

This disclosure is generally directed to computer-implemented methods and apparatuses for evaluating wear of tires with non-axisymmetric tread patterns.

### BACKGROUND

In the development of new tires, in the last years, numerical simulation techniques have been widely adopted. Such virtual prototyping techniques can replace the fabrication of a large number of experimental prototypes and field tests. As a result, advanced virtual prototyping techniques go along with a considerable reduction of development cost as well as a shortened time to market. In the end, effective and efficient virtual prototyping methods are an important factor in maintaining competitiveness.

Beyond that, reducing the number of fabricated prototypes renders tire development more sustainable by saving valuable resources, reducing the amount of chemicals as well as by saving energy. Thus, virtual prototyping techniques can be considered as an important building block in fighting climate change.

To have effective virtual prototyping of tires, it is required to evaluate the wear performance of a tire. In the state of the art, several simulation-based methods for the prediction of the wear performance of a tire are described. The used simulation techniques include for example transient analysis, static rolling analysis or steady-state transport analysis.

Transient analysis requires a large number of computational resources. When the underlying simulation model has reached a certain complexity, the method can only be used in a reasonable way on a high-performance computer cluster. Even then, however, the transient analysis simulations often require tens of hours. In addition, the simulations often show numerical instabilities.

In contrast, more simplified options such as static rolling analysis, neglect the dynamic effects of a tire as well as respective material properties.

Steady-state transport analysis shows some limitations in replicating the real physics of a tire at the contact region between the tire and the road in cases involving a tire with a non-axisymmetric tread pattern.

It is the objective of this disclosure to present a new approach in order to overcome the limitations when evaluating wear of a tire with a non-axisymmetric tread pattern immanent to the virtual prototyping techniques of the state of the art.

### SUMMARY

The above objective is achieved by the present disclosure of various computer-implemented methods and apparatuses for evaluating wear of a tire with a non-axisymmetric tread pattern.

According to a first aspect, the disclosure provides a computer-implemented method for evaluating wear of a tire with a non-axisymmetric tread pattern. The method comprises providing a wear model of the tire configured to convert a frictional energy rate into a wear energy rate. The method further comprises providing a first three-dimensional (3D) model of the tire with the non-axisymmetric tread pattern, generating a plurality of simplified 3D models based at least in part on the first 3D model of the tire with the non-axisymmetric tread pattern, performing a plurality of steady-state transport analyses based at least in part on each one of the plurality of simplified 3D models, post-processing the results of each of the plurality of performed steady-state transport analyses and evaluating the wear of the tire with the non-axisymmetric tread pattern based on the post-processed results of the plurality of performed steady-state transport analyses and the wear model. By the disclosed method, the wear of a tire with a non-axisymmetric tread pattern can be evaluated in a fast, efficient and accurate manner. This allows making a rapid and accurate characterization of the overall lifetime/mileage of a tire and therefore paves the way to fast virtual prototyping techniques. By applying such techniques, a large number of amendments and/or optimizations of the tread structure and/or the tire material can be evaluated within a very short time.

According to an example of the first aspect, the computer-implemented method for evaluating wear of a tire with a non-axisymmetric tread pattern further comprises constructing a history of relevant metrics for the evaluation of tire wear based at least in part on the post-processed results of each of the plurality of performed steady-state transport analyses.

According to a further example of the first aspect, generating a plurality of simplified 3D models based at least in part on the first 3D model of the tire with the non-axisymmetric tread pattern further comprises defining a first sector of the first 3D model of the tire with the non-axisymmetric tread pattern, creating a first simplified 3D model of the plurality of simplified 3D models of the tire based at least in part on periodically and circularly arranging the defined first sector, defining at least one additional sector of the first 3D model of the tire with the non-axisymmetric tread pattern, wherein the additional sector is shifted by a predefined angle with respect to a previously defined sector and creating at least a second simplified 3D model of the plurality of simplified 3D models of the tire based at least in part on periodically and circularly arranging the at least one additional defined sector.

According to another example of the first aspect, the pre-defined angle is within a range of 0.01° to 1° depending on the level of detail of the non-axisymmetric tread pattern and wherein a preferred range is within 0.15° to 0.35°.

According to yet another example of the first aspect, generating the wear model of the tire configured to convert the frictional energy rate into the wear energy rate is generated based at least in part on testing a block of the material of the tire by means of a linear friction tester at least one of different sliding speeds, loads and sliding distances and generating an abradability model as well as a friction map based at least in part on the testing of the block of the material of the tire.

According to another example of the first aspect, the wear model of the tire configured to convert the frictional energy rate into the wear energy rate further comprises providing an absolute local material abrasion value based on a determined wear energy rate.

According to another example of the first aspect, the steady-state transport analysis is based on an arbitrary Lagrangian Eulerian (ALE) formulation.

According to a further example of the first aspect, the first 3D model of the tire with the non-axisymmetric tread pattern is based on a finite element (FE) model.

According to another example of the first aspect, the relevant metrics for the evaluation of wear comprise at least one of slip, pressure and friction.

In one example of the first aspect, post-processing the results of the plurality of steady-state transport analyses comprises obtaining the results of each of the plurality of performed steady-state transport analyses, wherein the results of each of the plurality of performed steady-state transport analyses comprise one or more simulated physical conditions contributing to tire wear, merging the results of each of the plurality of performed steady-state transport analyses, wherein the results are merged for each for the one or more simulated physical conditions contributing to tire wear separately, determining a contribution to the abrasion of a tire based on the separately merged result for each of the one or more simulated physical conditions contributing to tire wear and determining an averaged wear rate of the tire with the non-axisymmetric tread pattern.

In a further example of the first aspect, the first 3D model of the tire with the non-axisymmetric tread pattern is configured to be modified by adjusting one or more design parameters or based on a previously evaluated wear of the tire with the non-axisymmetric tread pattern.

In a further example of the first aspect, the computer-implemented method for evaluating wear of a tire with a non-axisymmetric tread pattern further comprises providing a second 3D model of the tire with the non-axisymmetric tread pattern, wherein the second 3D model is different from the first 3D model. The method further comprises generating a plurality of simplified 3D models based at least in part on the second 3D model of the tire with the non-axisymmetric tread pattern. The method further comprises performing a plurality of steady-state transport analysis based at least in part on each one of the plurality of simplified 3D models. The method further comprises post-processing the results of each of the plurality of performed steady-state transport analyses and evaluating the wear of the tire with the non-axisymmetric tread pattern based on the post-processed results of the plurality of performed steady-state transport analyses and the wear model.

According to another example of the first aspect, the second 3D model of the tire with the non-axisymmetric tread pattern is configured to be modified by adjusting one or more design parameters or based on a previously evaluated wear of the tire with the non-axisymmetric tread pattern.

According to another example of the first aspect, the computer-implemented method for evaluating wear of a tire with a non-axisymmetric tread pattern further comprises identifying one of the first or second of the 3D models of the tire with the non-axisymmetric tread pattern based on one or more predefined criteria with respect to the evaluated wear.

According to a second aspect, the disclosure provides an apparatus for evaluating wear of a tire with a non-axisymmetric tread pattern comprising means for providing a wear model of the tire configured to convert a frictional energy rate into a wear energy rate. The apparatus further comprises means for providing a first three-dimensional, 3D, model of the tire with the non-axisymmetric tread pattern. The apparatus further comprises means for generating a plurality of simplified 3D models based at least in part on the first 3D model of the tire with the non-axisymmetric tread pattern. The apparatus further comprises means for performing a plurality of steady-state transport analyses based at least in part on each one of the plurality of simplified 3D models. The apparatus further comprises means for post-processing the results of each of the plurality of performed steady-state transport analyses and means for evaluating the wear of the tire with the non-axisymmetric tread pattern based on the post-processed results of the plurality of performed steady-state transport analyses and the wear model.

In an example of the second aspect, the apparatus comprises means configured to perform any of the methods disclosed herein.

According to a third aspect, the disclosure provides a computer program comprising instructions which, when the program is executed by a computer, cause the computer to carry out any of the methods disclosed herein. The computer program may be stored on a non-volatile computer readable medium.

Further benefits and advantages of the present invention will become apparent after a careful reading of the detailed description with appropriate reference to the accompanying drawings.

### BRIEF DESCRIPTION OF THE DRAWINGS

Fig. 1 illustrates an overview of the simulation of a tire with a non-axisymmetric tread pattern, where general input data as well as loads applied to the three-dimensional model are highlighted, according to the present disclosure.
Fig. 2a illustrates a sample rubber block of the material of a tire with non-axisymmetric tread pattern used for linear friction tests, according to the present disclosure.
Fig. 2b illustrates an example friction map generated by a combination of a series of linear friction tests and a fitting algorithm, according to the present disclosure.
Fig. 2c illustrates example abradability models fitted for various tire material blocks, according to the present disclosure.
Fig. 3 illustrates the determining of the sliding distance for a particular tire material block based on frictional data determined by a series of linear friction tests, according to the present disclosure.
Fig. 4 illustrates a flow chart of a method for providing a wear model of the tire configured to convert a frictional energy rate into a wear energy rate, according to the present disclosure.
Fig. 5a illustrates the process of the generation of a first simplified 3D model of a plurality of simplified 3D models based at least in part on a 3D model of a tire with a tire with a non-axisymmetric tread pattern, according to the present disclosure.
Fig. 5b illustrates the process of the generation of a second simplified 3D model of a plurality of simplified 3D models based at least in part on a 3D model of a tire with a tire with a non-axisymmetric tread pattern, according to the present disclosure.
Fig. 6 illustrates a flow chart of a method for generating a plurality of simplified 3D models based at least in part on a 3D model of a tire with a non-axisymmetric tread pattern, according to the present disclosure.
Fig. 7 illustrates a simulation framework for a tire with a non-axisymmetric tread pattern using steady-state analysis, according to the present disclosure.
Fig. 8 illustrates a flow chart of post-processing the results of each of a plurality of steady-state transport analyses, according to the present disclosure.
Fig. 9 illustrates a flow chart of a computer-implemented method for evaluating wear of a tire with a non-axisymmetric tread pattern, according to the present disclosure.
Fig. 10 illustrates a block diagram of an apparatus for evaluating wear of a tire with a non-axisymmetric tread pattern, according to the disclosure.

### DETAILED DESCRIPTION

The present disclosure provides a computer-implemented method for evaluating wear of a tire with a non-axisymmetric tread pattern.

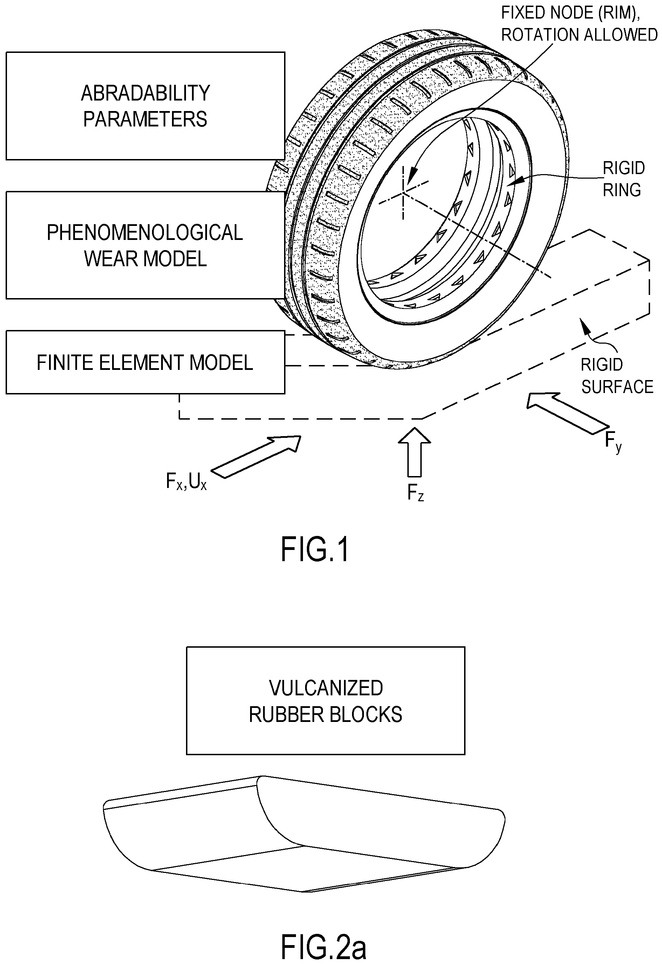

Fig. 1 illustrates an overview of the concept behind the computer-implemented method for evaluating wear of a tire with a non-axisymmetric tread pattern as disclosed herein. By means of the disclosed method, based at least in part on a three-dimensional computerized model of a tire with a non-axisymmetric tread pattern and a wear model, a fast and accurate prediction of the wear behavior of the respective tire can be made. In general, a wear model of a tire allows determining the wear of a tire, i.e., the way how the tread pattern of a tire degrades during use. In a wider sense, a wear model allows determining the lifetime of a tire. Wear may especially depend on a combination of physical conditions such as forces that operate on a tire and the mileage of the respective tire. Said physical conditions in turn may depend on various factors, such as the driving style, the type of road, the vehicle load etc. In the present case, the wear model is particularly configured to convert a frictional energy rate into a wear energy rate. The wear model further allows determining various abradability parameters of the rubber material of the respective tire and the applied rough substrate structures, by establishing a relation of the frictional energy converted into wear energy especially in contact points which status is changing from a stick to a slip condition, i.e., improving the description of the rolling phenomenon and not only the sliding phenomenon. Notice that for a full sliding condition, all frictional energy may be converted into wear energy, reproducing the effects observed in linear friction tests.

The evaluation of the tire wear according to the method disclosed herein is further based on a first three-dimensional (3D) model of a tire with a non-axisymmetric tread pattern. The first 3D model is preferably a finite element (FE) model. Based on the 3D model and the wear model, within a numerical finite element analysis, the wear rate of a tire with a non-axisymmetric tread pattern can be predicted accurately and efficiently. Therefore, in the first instance various physical conditions such as forces and velocities which have an impact on a rolling tire are determined. In a second step, by means of the wear model, the physical conditions operating on the tire are translated into contributions to tire wear. Finally, the total wear and/or the total wear rate of the tire is evaluated. From this information, predictions on the estimated overall tire lifetime can be made.

In practice, numerical simulations of a rolling tire with non-axisymmetric tread patterns with conventional methods can be costly and time-consuming. As pointed out earlier, tradeoffs need to be made either with respect to computing resources, simulation time or prediction accuracy.

In contrast to conventional methods, the computer-implemented method for evaluating the wear of a tire with a non-axisymmetric tread pattern as disclosed herein allows to achieve both, efficiency in terms of a short simulation time, low usage of computing resources and low cost as well as high accuracy of the evaluated tire wear.

For the sake of achieving efficiency, the numerical analysis of the tire with the non-axisymmetric tread pattern as disclosed herein comprises generating a plurality of simplified 3D models based at least in part on the first 3D finite element model of the tire with the non-axisymmetric tread pattern. Each of the simplified models can be considered as a snapshot of the more complex model of the tire with the non-axisymmetric tread pattern at a different angular position. For the sake of generating such a simplified model, in a first step, a sector of the first 3D model of the tire with the non-axisymmetric tread pattern is defined. In a subsequent step, the simplified 3D model is generated by circularly and periodically arranging the defined sector of the first 3D model. Based on each of the plurality of simplified 3D models, a simple and fast steady-state transport analysis is performed, which can be performed in parallel, further decreasing the computational costs significantly.

The high accuracy of the disclosed computer-implemented method is achieved by the way how the results of each of the performed steady-state transport analyses are post-processed. From every performed steady-state transport analysis, one or more different physical conditions contributing to the tire wear are determined and evaluated. In a further step, the results of the plurality of performed steady-state transport analyses are merged for each condition separately. Likewise, the overall contribution to tire wear by each condition is determined. Based on the contributions to tire wear by each condition, an overall tire wear rate is determined which corresponds to the tire wear rate of the respective tire with the non-axisymmetric tread pattern.

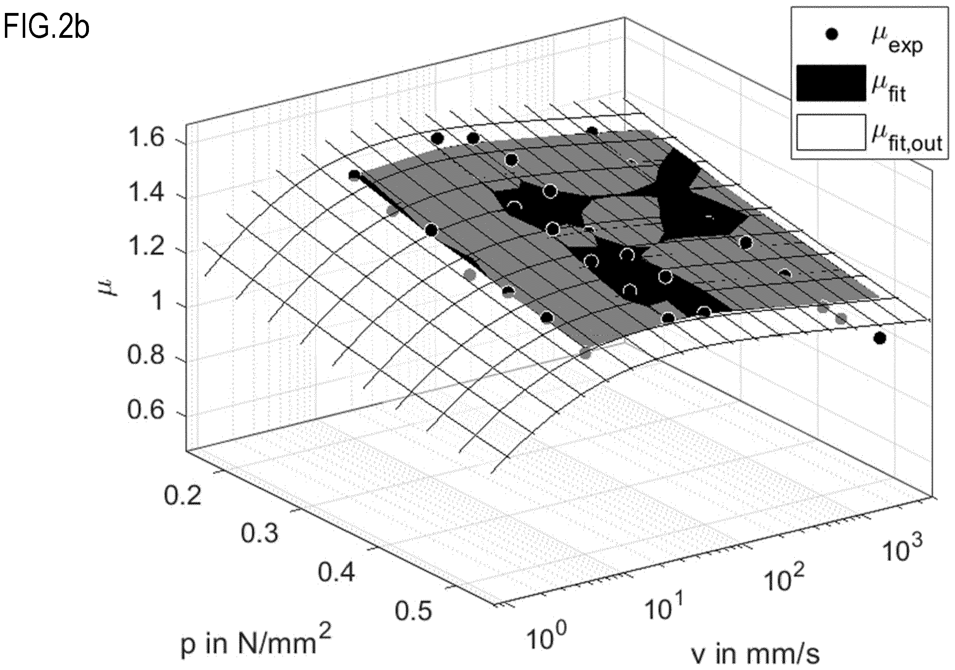

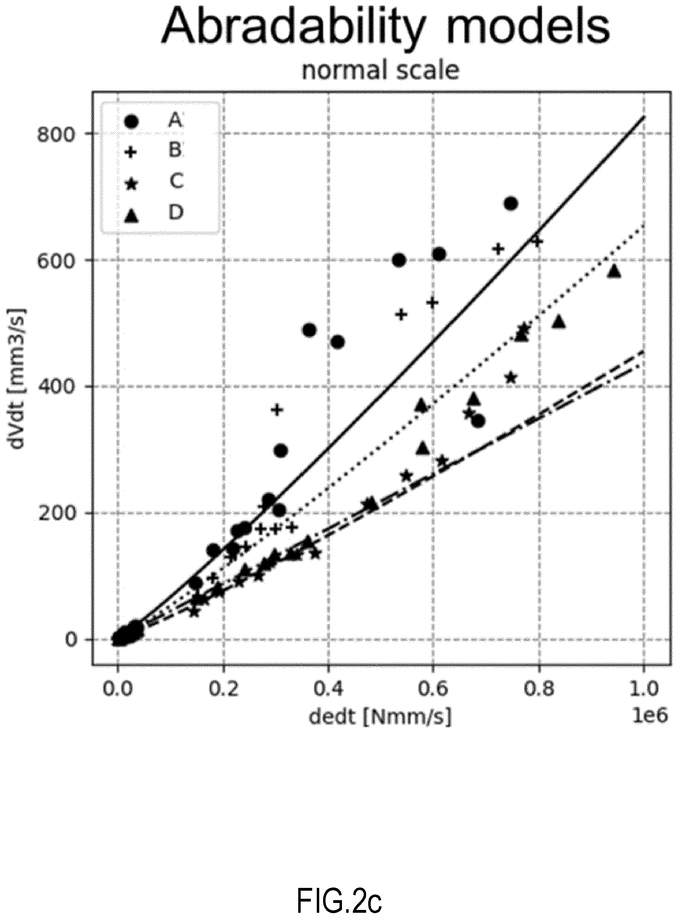

In Fig. 2a, Fig. 2b and Fig. 2c illustrate different steps of developing a wear model of a tire configured to convert a frictional energy rate into a wear energy rate, according to the present disclosure.

Fig. 2a illustrates a rubber block of a tire material. In order to characterize such a tire material in terms of abradability, wear properties and thus in terms of overall lifetime, linear friction tests may be used. In the frame of such linear friction tests, a rubber block of the tire material under test is pressed onto a test track with a pre-defined normal force. In a subsequent step, the respective rubber block sample is slid along the test track with a pre-defined velocity profile. Based on a series of such linear friction tests, a friction map as well as other abradability parameters for a particular tire material may be obtained.

Fig. 2b illustrates an example of a three-dimensional friction map of a particular tire material. On the z-axis, such a friction map illustrates the coefficient of friction µ of a particular tire material dependent on the velocity v in mm/s (x-axis) and the contact pressure p in N/mm² (y-axis). During a linear friction test, based on the measured normal force and the tangential friction force, the coefficient of friction µ_{exρ} for a particular tire material is determined with respect to a particular sliding velocity profile and a particular contact pressure. In order to develop a friction map as illustrated by Fig. 2b, the coefficient of friction µ_{exρ} is to be determined for multiple sliding velocity profiles and contact pressures of the rubber block under test, i.e., by performing a series of multiple linear friction tests.

Due to a variety of fitting algorithms, a friction map for a particular tire material can be developed based on a relatively small number of linear friction test already. In Fig. 2b, the values for the coefficient of friction which have been determined by an actual linear friction test are illustrated by black dots and denoted as µ_{exρ}. A respective friction map covering a wide range of velocities and contact pressures can then be generated by a respective fitting algorithm.

In Fig. 2c, abradability models fitted for various tire material blocks are illustrated. The abradability models are obtained by standardized fitting algorithms, relating the frictional energy in the sample and the mass loss rate. The former is estimated based on loading conditions, sample geometry and the sliding distance, while the latter is an output of linear friction tests. Due to the nature of the experiment, an abradability model at this point can be computed by the recorded mass loss during linear friction tests performed at different conditions and the calculated frictional energy given by the measurement of frictional forces and the sliding distance. The abradability models are described by an equation of the type dVdt = A ^{∗} dedt, which correlates the abrasion rate, dVdt, i.e., the rate of loss volume with the frictional energy, dedt, i.e., the product of the frictional force and the sliding distance through the abradability parameter, A, which is the intrinsic resistance to abrasion of the materials. The parameter A is then determined by the angular coefficient from the fitting of the experimental abrasion tests. The x-axis of Fig. 2c shows the calculated frictional energy in Nmm/s, while the y-axis shows the rate of mass loss converted in volume loss and expressed in mm³/s.

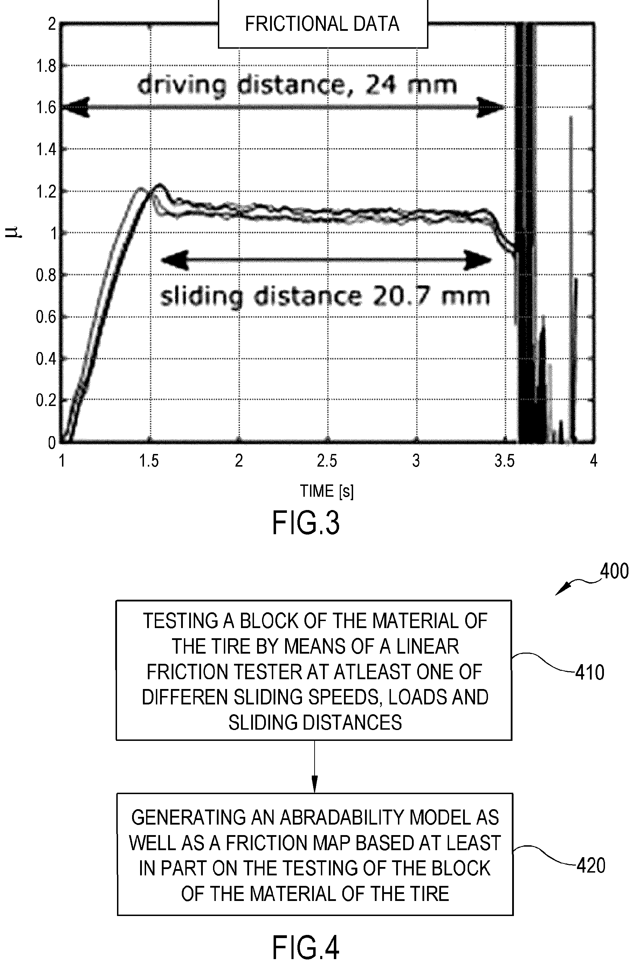

Fig. 3 illustrates how frictional data allow an estimation of the distance at which the rubber block starts sliding within a linear friction test based on the friction data, according to the present disclosure. The distance at which the block starts sliding is the point from which on it is in general assumed that the wear rate becomes constant. The x-axis of Fig. 3 shows the respective time during a linear friction test in seconds. The y-axis shows the respective coefficient of friction of a rubber block. As it can be seen, for various linear friction tests (indicated by different curve styles), within the first 1.5 seconds, the determined coefficient of friction is increasing. After that, the coefficient of friction as well as the wear rate becomes constant. Finally, the sliding distance, i.e., the distance in which the wear rate is constant can be determined. From the sliding distance together with the frictional force, the frictional energy can be computed.

Fig. 4 illustrates an exemplary flow chart of providing 400 a wear model of a tire configured to convert a frictional energy rate into a wear energy rate. At 410, a block of the material of a tire is tested by means of a linear friction tester at least one of different sliding speeds, loads and sliding distances. At 420, an abradability model as well as a friction map based at least in part on the testing of the block of the material of the tire are generated. In a preferred aspect, providing the wear model of the tire configured to convert a frictional energy rate into a wear energy rate further comprises providing an absolute local material abrasion value based on the determined energy rate.

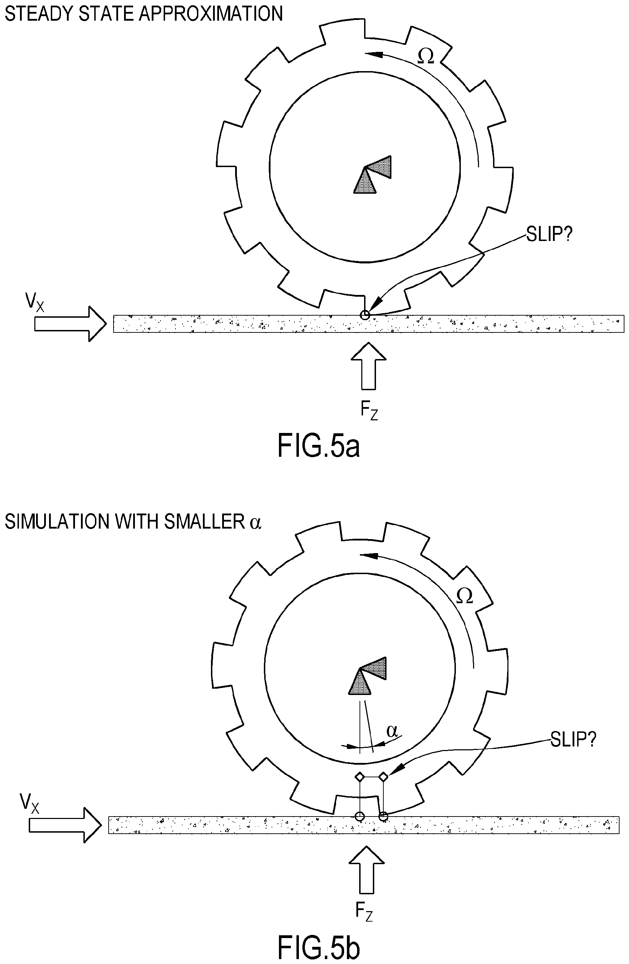

Fig. 5a and Fig. 5b illustrate exemplary aspects of generating a plurality of simplified 3D models based at least in part on a provided first 3D model of a tire with a non-axisymmetric tread pattern. Each of the simplified 3D models of the provided first 3D model of a tire with a non-axisymmetric tread pattern can be considered as one snapshot taken during the rolling process of a treaded tire at a different angular position with the assumption that the geometry of the tire remains periodic.

Fig. 5a illustrates creating such a first simplified 3D model of a plurality of simplified 3D models, i.e., a first snapshot of the rolling process of a tire with a non-axisymmetric tread pattern.

Creating a first simplified 3D model of a tire with a non-axisymmetric tread pattern comprises defining a first sector of the first 3D model of the tire with the non-axisymmetric tread pattern and creating the first simplified model based at least in part on periodically and circularly arranging the defined first sector. The sector angle of the defined first sector may be dependent on the physical properties of the tire with the non-axisymmetric tread pattern.

Fig. 5b illustrates creating a second simplified 3D model of a plurality of simplified 3D models, i.e., a second snapshot of the rolling process of a tire with a non-axisymmetric tread pattern.

Creating a second simplified 3D model of a tire with a non-axisymmetric tread pattern comprises defining an additional sector of the first 3D model of the tire with the non-axisymmetric tread pattern, wherein the additional sector is shifted by a pre-defined angle with respect to a previously defined angle with respect to a previously defined sector and creating the second simplified model based at least in part on periodically and circularly arranging the additional defined sector. The sector angle of the defined additional sector may be dependent on the physical properties of the tire with the non-axisymmetric tread pattern.

Based on the steps illustrated by Fig. 5b, an arbitrary number of additional simplified 3D models of a plurality of simplified 3D models may be generated. The total number of the simplified 3D models may be dependent on the respective sector angle.

The predefined angle with respect to which the additional sectors of the one or more additional simplified models are shifted is within a range of 0.01° to 1°, depending on the level of detail of the non-axisymmetric tread pattern.

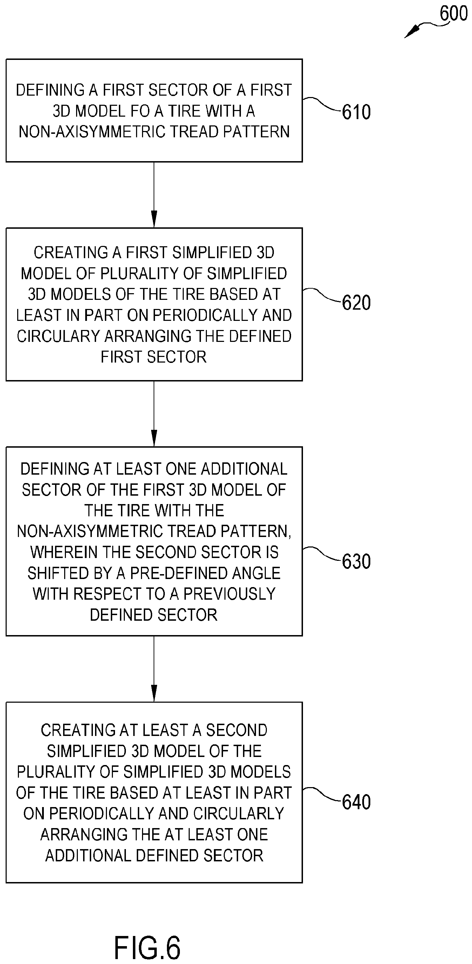

Fig. 6 illustrates a flow chart of generating 600 a plurality of simplified 3D models based at least in part on a first 3D model of a tire with a non-axisymmetric tread pattern. At 610, a first sector of the first 3D model of the tire with the non-axisymmetric tread pattern is defined. At 620, a first simplified 3D model of the plurality of simplified 3D models of the tire is created based at least in part on periodically and circularly arranging the defined first sector. At 630, at least one additional sector of the first 3D model of the tire with the non-axisymmetric tread pattern is defined, wherein the additional sector is shifted by a predefined angle with respect to a previously defined sector. At 640, at least a second simplified 3D model of the plurality of simplified 3D models of the tire is created based at least in part on periodically and circularly arranging the at least one additional defined sector.

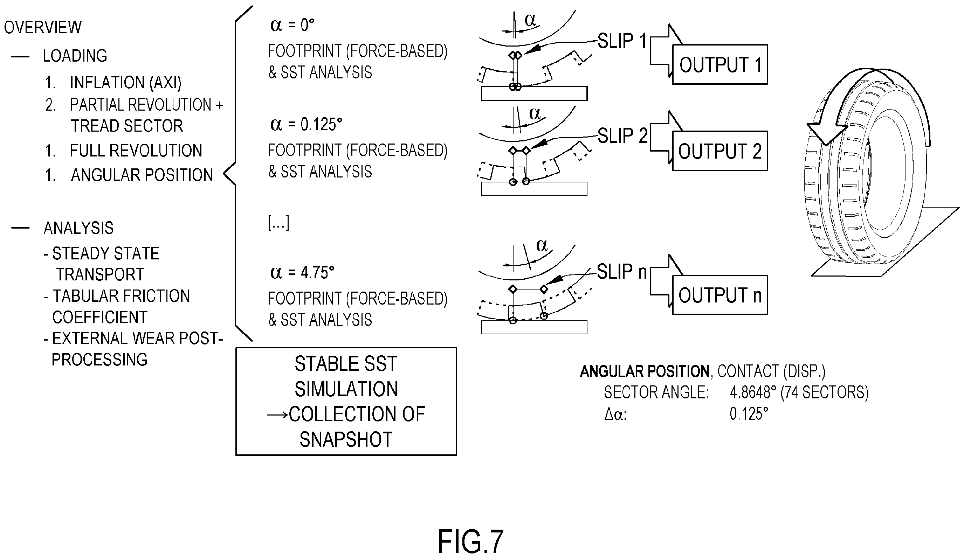

Fig. 7 illustrates an example simulation framework for a non-axisymmetric tire based on the computer-implemented method for evaluating wear of a tire with a non-axisymmetric tread pattern, according to the present disclosure.

Based on a first 3D model of a tire with a non-axisymmetric tread pattern, n simplified models are generated in accordance with the method illustrated by Fig. 5a and Fig. 5b. In the example illustrated by Fig. 7, the sector angle of each of the n simplified models is 4.8648°. The pre-defined angle by which the defined sectors of the first 3D model of the tire with the non-axisymmetric tread pattern which are the basis for two subsequent simplified models are shifted is 0.125°.

For each of the n simplified 3D models, a respective steady-state transport analysis is performed and the results of each of the n performed steady-state transport analyses are post-processed.

Post-processing the results of each of the n steady-state transport analyses further comprises obtaining the results of each of the n performed steady-state transport analyses, wherein the results of each of the n performed steady-state transport analyses comprise one or more simulated physical conditions contributing to tire wear. The physical conditions contributing to tire wear may comprise at least one of lateral forces longitudinal forces and tire slip.

Post processing the results of each of the n steady-state transport analyses further comprises merging the results of each of the n performed steady-state transport analyses, wherein the results are merged for each of the one or more simulated physical conditions contributing to tire wear, separately.

Post processing the results of each of the n steady-state transport analyses further comprises determining a contribution to the abrasion of a tire based on the separately merged results for each of the one or more simulated physical conditions contributing to tire wear and determining an averaged wear rate of the tire with the non-axisymmetric tread pattern.

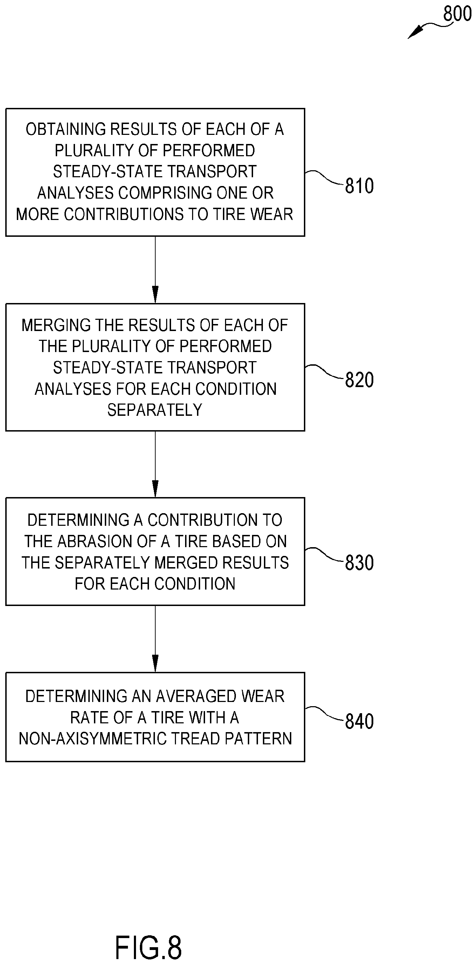

Fig. 8 illustrates a flow chart of post-processing 800 the results of each of a plurality of steady-state transport analyses. At 810, the result of each of a plurality of performed steady-state transport analyses are obtained, wherein the results of each of the plurality of performed steady-state transport analyses comprise one or more simulated physical conditions contributing to tire wear. At 820, the results of each of the plurality of performed steady-state transport analyses are merged, wherein the results are merged for each of the one or more simulated physical conditions contributing to tire wear, separately. At 830, a contribution to the abrasion of a tire based on the separately merged results for each of the one or more simulated physical conditions contributing to tire wear. At 840, an averaged wear rate of the tire with the non-axisymmetric tread pattern is determined.

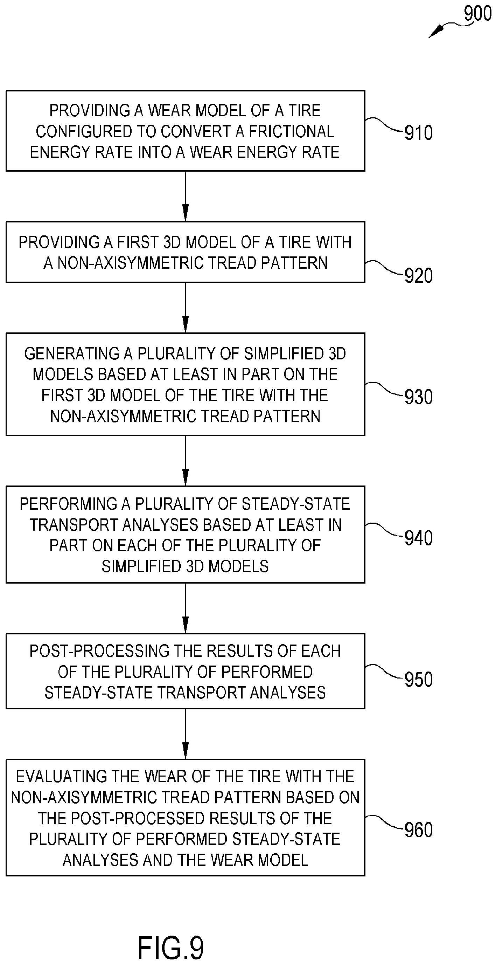

Fig. 9 illustrates a flow chart of a computer-implemented method for evaluating wear of a tire with a non-axisymmetric tread pattern.

At 910, a wear model of the tire configured to convert a frictional energy rate into a wear energy rate is provided. The wear model allows determining a wear rate based on actual physical conditions such as e.g., forces operating on the tire.

According to one aspect, the wear model is generated based on testing a block of the material of the tire by means of a linear friction tester at least one of different sliding speeds, loads and sliding distances and generating an abradability model as well as a friction map based at least in part on the testing of the block of the material of the tire.

According to another aspect, providing the wear model of the tire further comprises providing an absolute local material abrasion value based on a determined wear energy rate.

At 920, a first three-dimensional (3D) model of the tire with the non-axisymmetric tread pattern is provided. The first 3D model of the tire with the non-axisymmetric tread pattern represents an accurate model of the actual geometry of the tire including its full tread pattern.

According to one aspect, the first 3D model of the tire with the non-axisymmetric tread pattern is based on a finite element (FE) model.

According to another aspect, the first 3D model of the tire with the non-axisymmetric tread pattern is configured to be modified by adjusting one or more design parameters or based on a previously evaluated wear of the tire with the non-axisymmetric tread pattern.

At 930, a plurality of simplified 3D models based at least in part on the first 3D model of the tire with the non-axisymmetric tread pattern is generated. Generating the plurality of simplified 3D models allows the analysis of the tire with the non-axisymmetric tread pattern by means of a plurality of separate steady-state transport analyses.

In one aspect, generating a plurality of simplified 3D models based at least in part on the first 3D model of the tire with the non-axisymmetric tread pattern further comprises defining a first sector of the first 3D model of the tire with the non-axisymmetric tread pattern, creating a first simplified 3D model of the plurality of simplified 3D models of the tire based at least in part on periodically and circularly arranging the defined first sector, defining at least one additional sector of the first 3D model of the tire with the non-axisymmetric tread pattern, wherein the additional sector is shifted by a predefined angle with respect to a previously defined sector and creating at least a second simplified 3D model of the plurality of simplified 3D models of the tire based at least in part on periodically and circularly arranging the at least one additional defined sector. Each of the plurality of simplified 3D models can be considered as a snapshot of the rolling process of the tire with the non-axisymmetric tread pattern at a different angular position under the assumption that the geometry of the tire is periodic.

According to another aspect, the pre-defined angle is within a range of 0.01° to 1°. The pre-defined angle can be modified e.g., based on the level of detail of the non-axisymmetric tread pattern of the tire to be analyzed and wherein a preferred range is within 0.15° to 0.35°.

At 940, a plurality of steady-state transport analyses based at least in part on each one of the plurality of simplified 3D models is performed.

According to one aspect, the steady-state transport analysis is based on an arbitrary Lagrangian Eulerian (ALE) formulation.

At 950, the results of each of the plurality of performed steady-state transport analyses are post-processed. The post-processing allows the combination of the results of the plurality of steady-state transport simulations based on each of the plurality of simplified 3D models in a way to obtain an overall result which corresponds to the result of an analysis of the tire with the non-axisymmetric tread pattern while at the same time consuming less time and computing resources.

In one aspect, post-processing the results of the plurality of steady-state transport analyses comprises obtaining the results of each of the plurality of performed steady-state transport analyses, wherein the results of each of the plurality of performed steady-state transport analyses comprise one or more simulated physical conditions contributing to tire wear, merging the results of each of the plurality of performed steady-state transport analyses, wherein the results are merged for each for the one or more simulated physical conditions contributing to tire wear separately, determining a contribution to the abrasion of a tire based on the separately merged result for each of the one or more simulated physical conditions contributing to tire wear and determining an averaged wear rate of the tire with the non-axisymmetric tread pattern.

At 960, the wear of the tire with the non-axisymmetric tread pattern is evaluated based on the post-processed results of the plurality of performed steady-state transport analyses and the wear model.

According to one aspect, the computer-implemented method for evaluating wear of a tire with a non-axisymmetric tread pattern further comprises constructing a history of relevant metrics for the evaluation of tire wear based at least in part on the post-processed results of each of the plurality of performed steady-state transport analyses.

According to another aspect, the relevant metrics for the evaluation of wear comprise at least one of slip, pressure and friction.

In a further aspect, the computer-implemented method for evaluating wear of a tire with a non-axisymmetric tread pattern further comprises providing a second 3D model of the tire with the non-axisymmetric tread pattern, wherein the second 3D model is different from the first 3D model. The method further comprises generating a plurality of simplified 3D models based at least in part on the second 3D model of the tire with the non-axisymmetric tread pattern. The method further comprises performing a steady-state transport analysis based at least in part on each one of the plurality of simplified 3D models. The method further comprises post-processing the results of each of the plurality of performed steady-state transport analyses and evaluating the wear of the tire with the non-axisymmetric tread pattern based on the post-processed results of the plurality of performed steady-state transport analyses and the wear model.

According to one aspect, the second 3D model of the tire with the non-axisymmetric tread pattern is configured to be modified by adjusting one or more design parameters or based on a previously evaluated wear of the tire with the non-axisymmetric tread pattern.

According to another aspect, the computer-implemented method for evaluating wear of a tire with a non-axisymmetric tread pattern further comprises identifying one of the first or second of the 3D models of the tire with the non-axisymmetric tread pattern based on one or more predefined criteria with respect to the evaluated wear. For example, a 3D model (including a particular tread pattern) of a tire with a non-axisymmetric pattern can be identified which performs best with respect to a specific pre-selected criterion (e.g., lifetime/mileage).

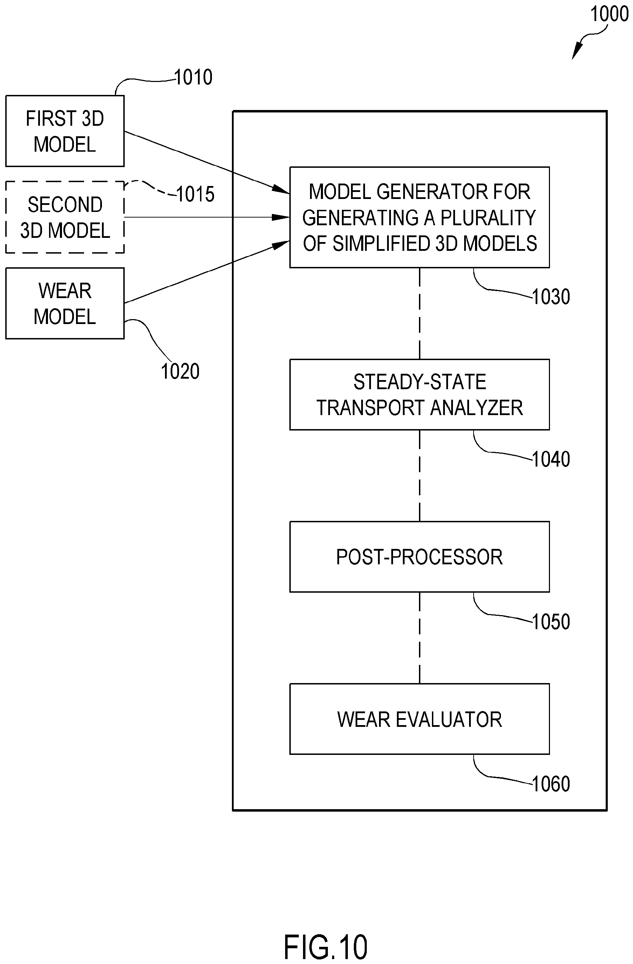

Fig. 10 illustrates a block diagram 1000 of an apparatus for evaluating wear of a tire with a non-axisymmetric tread pattern in accordance with the present disclosure. The apparatus includes a model generator 1030 for generating a plurality of simplified 3D models, a steady-state transport analyzer 1040, a post-processor 1050 and a wear evaluator 1060.

The model generator 1030 may receive a first 3D model 1010 of a tire with a non-axisymmetric tread pattern and a wear model 1020 of the tire configured to convert a frictional energy rate into a wear energy rate.

According to one aspect, the first 3D model 1010 of the tire with the non-axisymmetric tread pattern received by the model generator 1030 is based on a finite element (FE) model.

According to another aspect, the first 3D model 1010 of the tire with the non-axisymmetric tread pattern received by the model generator 1030 is configured to be modified by adjusting one or more design parameters or based on a previously evaluated wear of the tire with the non-axisymmetric tread pattern.

According to one aspect, the wear model 1020 received by the model generator 1030 is generated based on testing a block of the material of the tire by means of a linear friction tester at least one of different sliding speeds, loads and sliding distances and generating an abradability model as well as a friction map based at least in part on the testing of the block of the material of the tire.

According to another aspect, the model generator 1030 may determine an absolute local material abrasion value based on a determined wear energy rate.

The model generator 1030 may further generate a plurality of simplified 3D models based at least in part on the first 3D model 1010 of the tire with the non-axisymmetric tread pattern.

In one aspect, generating a plurality of simplified 3D models based at least in part on the first 3D model 1010 of the tire with the non-axisymmetric tread pattern by the model generator 1030 further comprises defining a first sector of the first 3D model 1010 of the tire with the non-axisymmetric tread pattern, creating a first simplified 3D model of the plurality of simplified 3D models of the tire based at least in part on periodically and circularly arranging the defined first sector, defining at least one additional sector of the first 3D model 1010 of the tire with the non-axisymmetric tread pattern, wherein the additional sector is shifted by a predefined angle with respect to a previously defined sector and creating at least a second simplified 3D model of the plurality of simplified 3D models of the tire based at least in part on periodically and circularly arranging the at least one additional defined sector. Each of the plurality of simplified 3D models can be considered as a snapshot of the rolling process of the tire with the non-axisymmetric tread pattern at a different angular position under the assumption that the geometry of the tire is periodic.

According to another aspect, the pre-defined angle is within a range of 0.01° to 1°. The pre-defined angle can be modified e.g., based on the level of detail of the non-axisymmetric tread pattern of the tire to be analyzed. A preferred range of the pre-defined angle is within 0.15° to 0.35°.

The steady-state transport analyzer 1040 may perform a plurality of steady-state transport analyses based at least in part on each one of the plurality of simplified 3D models.

According to one aspect, the steady-state transport analysis performed by the steady-state transport analyzer 1040 is based on an arbitrary Lagrangian Eulerian (ALE) formulation.

The post-processor 1050 may post-process the results of each of the plurality of performed steady-state transport analyses.

In one aspect, post-processing the results of the plurality of steady-state transport analyses by the post-processor 1050 comprises obtaining the results of each of the plurality of performed steady-state transport analyses, wherein the results of each of the plurality of performed steady-state transport analyses comprise one or more simulated physical conditions contributing to tire wear, merging the results of each of the plurality of performed steady-state transport analyses, wherein the results are merged for each for the one or more simulated physical conditions contributing to tire wear separately, determining a contribution to the abrasion of a tire based on the separately merged result for each of the one or more simulated physical conditions contributing to tire wear and determining an averaged wear rate of the tire with the non-axisymmetric tread pattern.

The wear evaluator 1060 may evaluate the wear of the tire with the non-axisymmetric tread pattern based on the post-processed results of the plurality of performed steady-state transport analyses and the wear model 1020.

According to one aspect, the wear evaluator 1060 may construct a history of relevant metrics for the evaluation of tire wear based at least in part on the post-processed results of each of the plurality of performed steady-state transport analyses.

According to another aspect, the relevant metrics for the evaluation of wear comprise at least one of slip, pressure and friction.

In a further aspect, the model generator 1030 may receive a second 3D model 1015 of the tire with the non-axisymmetric tread pattern, wherein the second 3D model 1015 is different from the first 3D model 1010. The model generator 1030 may further generate a plurality of simplified 3D models based at least in part on the second 3D model 1015 of the tire with the non-axisymmetric tread pattern. The steady-state transport analyzer 1040 may perform a plurality of steady-state transport analyses based at least in part on each one of the plurality of simplified 3D models. The post-processor 1050 may post-process the results of each of the plurality of performed steady-state transport analyses and the wear evaluator 1060 may evaluate the wear of the tire with the non-axisymmetric tread pattern based on the post-processed results of the plurality of performed steady-state transport analyses by the steady-state transport analyzer 1040 and the wear model 1020.

According to one aspect, the second 3D model 1015 of the tire with the non-axisymmetric tread pattern is configured to be modified by adjusting one or more design parameters or based on a previously evaluated wear of the tire with the non-axisymmetric tread pattern.

According to another aspect, the apparatus for evaluating wear of a tire with a non-axisymmetric tread pattern may identify one of the first 1010 or second 1015 of the 3D models of the tire with the non-axisymmetric tread pattern based on one or more predefined criteria with respect to the evaluated wear. For example, a 3D model 1010, 1015 (including a particular tread pattern) of a tire with a non-axisymmetric pattern can be identified which performs best with respect to a specific pre-selected criterion (e.g., lifetime/mileage).

## Claims

1. A computer-implemented method (900) for evaluating wear of a tire with a non-axisymmetric tread pattern, the method comprising:
providing a wear model of the tire configured to convert a frictional energy rate into a wear energy rate;
providing (920) a first three-dimensional, 3D, model of the tire with the non-axisymmetric tread pattern;
generating (930, 600) a plurality of simplified 3D models based at least in part on the first 3D model of the tire with the non-axisymmetric tread pattern;
performing (940) a plurality of steady-state transport analyses based at least in part on each one of the plurality of simplified 3D models;
post-processing (950, 800) the results of each of the plurality of performed steady-state transport analyses; and
evaluating (960) the wear of the tire with the non-axisymmetric tread pattern based on the post-processed results of the plurality of performed steady-state transport analyses and the wear model.

2. The computer-implemented method for evaluating wear of a tire with a non-axisymmetric tread pattern of claim 1, further comprising:
constructing a history of relevant metrics for the evaluation of tire wear based at least in part on the post-processed results of each of the plurality of performed steady-state transport analyses.

3. The computer-implemented method for evaluating wear of a tire with a non-axisymmetric tread pattern of claim 1 or 2, wherein generating (930, 600) a plurality of simplified 3D models based at least in part on the first 3D model of the tire with the non-axisymmetric tread pattern further comprises:
defining (610) a first sector of the first 3D model of the tire with the non-axisymmetric tread pattern;
creating (620) a first simplified 3D model of the plurality of simplified 3D models of the tire based at least in part on periodically and circularly arranging the defined first sector;
defining (630) at least one additional sector of the first 3D model of the tire with the non-axisymmetric tread pattern, wherein the at least one additional sector is shifted by a pre-defined angle with respect to a previously defined sector; and
creating (640) at least a second simplified 3D model of the plurality of simplified 3D models of the tire based at least in part on periodically and circularly arranging the at least one additional defined sector.

4. The computer-implemented method for evaluating wear of a tire with a non-axisymmetric tread pattern of claim 3, wherein the pre-defined angle is within a range of 0.01° to 1° depending on the level of detail of the non-axisymmetric tread pattern and wherein a preferred range is within 0.15° to 0.35°.

5. The computer-implemented method for evaluating wear of a tire with a non-axisymmetric tread pattern of any one of claims 1 to 4, wherein the wear model of the tire configured to convert the frictional energy rate into the wear energy rate is generated (400) based at least in part on:
testing (410) a block of the material of the tire by means of a linear friction tester at least one of different sliding speeds, loads and sliding distances; and
generating (420) an abradability model as well as a friction map based at least in part on the testing of the block of the material of the tire.

6. The computer-implemented method for evaluating wear of a tire with a non-axisymmetric tread pattern of claim 5, wherein providing the wear model of the tire configured to convert the frictional energy rate into the wear energy rate further comprises:
providing an absolute local material abrasion value based on a determined wear energy rate.

7. The computer-implemented method for evaluating wear of a tire with a non-axisymmetric tread pattern of any one of claims 1 to 6, wherein the steady-state transport analysis is based on an arbitrary Lagrangian Eulerian, ALE, formulation.

8. The computer-implemented method for evaluating wear of a tire with a non-axisymmetric tread pattern of any one of claims 1 to 7, wherein the first 3D model of the tire with the non-axisymmetric tread pattern is a finite element, FE, model.

9. The computer-implemented method for evaluating wear of a tire with a non-axisymmetric tread pattern of any one of claims 1 to 8, wherein the relevant metrics for the evaluation of wear comprise at least one of slip, pressure and friction.

10. The computer-implemented method for evaluating wear of a tire with a non-axisymmetric tread pattern of any one of claims 1 to 9, wherein post-processing (950, 800) the results of each of the plurality of steady-state transport analyses comprises:
obtaining (810) the results of each of the plurality of performed steady-state transport analyses, wherein the results of each of the plurality of performed steady-state transport analyses comprise one or more simulated physical conditions contributing to tire wear;
merging (820) the results of each of the plurality of performed steady-state transport analyses, wherein the results are merged for each of the one or more simulated physical conditions contributing to tire wear, separately;
determining (830) a contribution to the abrasion of a tire based on the separately merged results for each of the one or more simulated physical conditions contributing to tire wear; and
determining (840) an averaged wear rate of the tire with the non-axisymmetric tread pattern.

11. The computer-implemented method for evaluating wear of a tire with a non-axisymmetric tread pattern of any one of claims 1 to 10, wherein the first 3D model of the tire with the non-axisymmetric tread pattern is configured to be modified by adjusting one or more design parameters or based on a previously evaluated wear of the tire with the non-axisymmetric tread pattern.

12. The computer-implemented method for evaluating wear of a tire with a non-axisymmetric tread pattern of any one of claims 1 to 11, further comprising:
providing a second 3D model of the tire with the non-axisymmetric tread pattern, wherein the second 3D model is different from the first 3D model;
generating a plurality of simplified 3D models based at least in part on the second 3D model of the tire with the non-axisymmetric tread pattern;
performing a plurality of steady-state transport analyses based at least in part on each one of the plurality of simplified 3D models;
post-processing the results of each of the plurality of performed steady-state transport analyses; and
evaluating the wear of the tire with the non-axisymmetric tread pattern based on the post-processed results of the plurality of performed steady-state transport analyses and the wear model.

13. The computer-implemented method for evaluating wear of a tire with a non-axisymmetric tread pattern of claim 12, wherein the second 3D model of the tire with the non-axisymmetric tread pattern is configured to be modified by adjusting one or more design parameters or based on a previously evaluated wear of the tire with the non-axisymmetric tread pattern.

14. The computer-implemented method for evaluating wear of a tire with a non-axisymmetric tread pattern of claim 12 or 13, further comprising identifying one of the first or second of the 3D models of the tire with the non-axisymmetric tread pattern based on one or more predefined criteria with respect to the evaluated wear.

15. An apparatus for evaluating wear of a tire with a non-axisymmetric tread pattern comprising:
means for providing a wear model of the tire configured to convert a frictional energy rate into a wear energy rate;
means for providing a first three-dimensional, 3D, model of the tire with the non-axisymmetric tread pattern;
means for generating a plurality of simplified 3D models based at least in part on the first 3D model of the tire with the non-axisymmetric tread pattern;
means for performing a steady-state transport analysis based at least in part on each one of the plurality of simplified 3D models;
means for post-processing the results of each of the plurality of performed steady-state transport analyses; and
means for evaluating the wear of the tire with the non-axisymmetric tread pattern based on the post-processed results of the plurality of performed steady-state transport analyses and the wear model.

16. The apparatus of claim 15 further comprising means configured to perform any of the methods according to any one of claims 2 to 14.

17. A computer program comprising instructions which, when the program is executed by a computer, cause the computer to carry out the method of any one of claims 1 to 14.
